# EUROPÄISCHE PATENTSCHRIFT

(11) **EP 0 861 762 B1**
(45) Veröffentlichungstag und Bekanntmachung des Hinweises auf die Patenterteilung: **03.01.2001**
(21) Anmeldenummer: 98102444.1
(22) Anmeldetag: 12.02.1998
(51) Int. Cl.: B60R 21/24, B60R 21/22, B60R 21/26, B60R 21/32

(54) **Beifahrerairbag**
Passenger air bag
Coussin gonflable pour passager

(30) Priorität: 27.02.1997 DE 19707997
(43) Veröffentlichungstag der Anmeldung: 02.09.1998
(73) Patentinhaber: BREED AUTOMOTIVE TECHNOLOGY, INC., Lakeland, FL 33807-3050 (US)
(72) Erfinder: Specht, Martin, 82340 Feldafing (DE)
(74) Vertreter: Nöth, Heinz, Dipl.-Phys.

(56) Entgegenhaltungen:
- WO-A-90/09908
- DE-A- 2 053 565
- DE-A- 4 041 049
- DE-A- 19 526 334
- DE-A- 19 611 384
- DE-U- 29 605 585
- GB-A- 2 289 653
- US-A- 5 282 646
- US-A- 5 413 378
- PATENT ABSTRACTS OF JAPAN vol. 015, no. 168 (M-1107), 26.April 1991 & JP 03 032956 A (MAZDA MOTOR CORP), 13.Februar 1991,

## Beschreibung

Die Erfindung betrifft einen Beifahrerairbag nach dem Oberbegriff des Patentanspruches 1.

Ein derartiger Beifahrerairbag ist aus der JP 03-32956 A bekannt.

Da ein Beifahrerairbag ein großes Füllvolumen, insbesondere über 100 Liter und z.B. bis zu 130 Liter, hat, wirken wegen der erforderlichen kurzen Füllzeit in der Größenordnung von ca. 80ms erhebliche Kräfte. Wenn der Fahrzeuginsasse sich nicht in seiner normalen Sitzposition, sondern in einer sogenannten "Out-Of-Position"-Stellung, z.B. beim Schlafen oder Hantieren im Handschuhfach, befindet, besteht eine hohe Verletzungsgefahr des Fahrzeuginsassen, wenn diese beim Füllen des Gaskissens wirkenden Kräfte auf den Kopf oder Toraxbereich des Fahrzeuginsassen zur Auswirkung kommen. Diese Gefahren bestehen vor allem am Beifahrersitz. Wenn ferner ein Kindersitz am Beifahrersitz in Rebord-Position befestigt ist, besteht die Gefahr, daß der Beifahrerairbag beim Füllen mit hoher Kraft auf den Kindersitz einwirkt, woraus ebenfalls ein erhebliches Verletzungsrisiko für ein im Kindersitz befindliches Kind besteht. Die bisher auf dem Markt befindlichen Airbagvorrichtungen haben solche Gaskissen, die im wesentlichen nur dann eine Sicherheitsfunktion ausüben, wenn der Fahrzeuginsasse sich in normaler Sitzposition befindet, wobei auch die Anschnallpflicht beachtet werden muß.

Bei dem eingangs genannten bekannten Beifahrerairbag wird der aufblasbare Aufprallschutz durch drei Airbagkissen geschaffen. Im Normalbetrieb sind diese Airbagkissen in der Instrumententafel auf der Beifahrerseite des Kraftfahrzeugs in drei Kammern untergebracht. Jede Kammer ist durch Trennwände voneinander getrennt. Die drei Airbagkissen sind an eine gemeinsame Fülleinrichtung angeschlossen, welche die Trennwände durchdringend in den drei Kammern angeordnet ist. Die Befüllung der drei Airbagkissen erfolgt gleichzeitig. Im aufgeblasenen Zustand werden die Airbagkissen über Verbindungsbänder zusammengehalten. Durch die Anordnung der drei Airbagkissen in separaten Kammern ergibt sich eine aufwendige Montage der Airbagvorrichtung. Durch das gleichzeitige Aufblasen wird ebenfalls eine große Masse mit hoher Beschleunigung innerhalb kürzester Zeit auf den Beifahrer zubewegt.

Aus der WO 90/09908 ist ein für ein Lenkrad geeigneter Airbag bekannt, bei welchem eine zentrale Kammer von einer ringförmigen periferen äußeren Kammer umgeben wird. Die periphere äußere Kammer wird zeitlich vor der zentralen Kammer gefüllt, wobei Füllgas durch Öffnungen aus der peripheren Kammer in die zentrale Kammer strömt. Da die periphere Kammer vollständig gefüllt wird, werden auch ihre oben und unten liegenden mittleren Bereiche gefüllt.

Aus der DE 296 05 585 U1 sind mehrere nebeneinander liegende Airbagsysteme bekannt, die in einer zentralen Einheit von einem gemeinsamen Füllgasleitgehäuse umfaßt werden. Die einzelnen Airbagsysteme sind nebeneinander liegenden Beifahrersitzplätzen zugeordnet und werden je nach Sitzplatzbelegung einzeln gezündet, wobei ein entsprechendes Füllvolumen eines zugeordneten Airbags gleichzeitig insgesamt gefüllt wird.

Aufgabe der Erfindung ist es daher, einen Beifahrerairbag der eingangs genannten Art zu schaffen der eine verbesserte Sicherheitsfunktion, insbesondere auch bei "Out-Of-Position"-Stellungen des Beifahrers gewährleistet.

Diese Aufgabe wird erfindungsgemäß durch die kennzeichnenden Merkmale des Patentanspruches 1 gelöst.

Bei der Erfindung werden seitliche an ein mittleres Kissenteil angeformte Kissenteile zeitlich vor dem mittleren Kissenteil aufgeblasen.

Das mittlere Kissenteil liegt im aufgeblasenen Zustand der normalen Sitzposition des Fahrzeuginsassen gegenüber, während die beiden seitlichen Kissenteile sich zu beiden Seiten dieser Position erstrecken. Die beiden seitlichen Kissenteile sind im Winkel zu einer vertikalen Mittelebene des aufgeblasenen Kissens angeordnet. Dazwischen liegt das mittlere Kissenteil. Hierdurch wird erreicht, daß ein hoher Anteil des Füllvolumens sich nicht direkt auf den Fahrzeuginsassen zu bewegt, sondern seitlich von dieser Position. Das mittlere Kissenteil erstreckt sich gegenüber den seitlichen Kissenteilen um eine geringere Strecke in den Fahrgastraum, so daß auch bei einer vorverlagerten Stellung des Fahrzeuginsassen dieser Kissenteil dem Fahrzeuginsassen mit verminderter Kraft oder aufgrund seiner reduzierten Vorschubstrecke überhaupt nicht trifft. Ferner kann die Entfaltungsrichtung des Gaskissens bei dem Beifahrerairbag von der Armaturentafel in bevorzugter Weise annähernd vertikal oder mit sehr spitzem Winkel gegenüber der Vertikalen schräg nach oben gerichtet sein. Bei einem Unfallverlauf wirken die beiden seitlichen Kissenteile, die in zeitlich vor dem mittleren Kissenteil aufgeblasen werden, als Führungen für das nach vorne verlagerte Körperteil, insbesondere den Kopf des Fahrzeuginsassen zum mittleren Kissenteil hin, welches so weit in den Fahrgastraum ragt, daß es die erforderliche Schutzfunktion ausübt.

Das Gaskissen, welches im Kopf/Thorax-Bereich einen Schutz für den Körper des Fahrzeuginsassen bildet, kann mit einem unten liegenden Gaskissen, das im Kniebereich des Fahrzeuginsassen eine Schutzfunktion ausübt, kombiniert sein. Beide Gaskissen sind getrennt voneinander angeordnet und werden gegebenenfalls auch von separaten Füllgasquellen beliefert.

Bei einem Beifahrerairbag ist das Gaskissen bzw. sind die Gaskissen in der Weise ausgebildet, daß auf einen auf dem Beifahrersitz angeordneten Kindersitz, insbesondere Rebord-Schalensitz, beim Aufblasen keine überhöhten Kräfte einwirken. In bevorzugter Weise wird dies dadurch erreicht, daß zwischen dem oben angeordneten Gaskissen und dem unten angeordneten Gaskissen ein Freiraum vorgesehen ist. Der Kindersitz, insbesondere Rebord-Schalensitz, kann daher verschiedene Neigungsstellungen des Kopfteiles aufweisen, ohne daß auf diesen Kopfteil überhöhte Kräfte beim Aufblasen der Gaskissen wirken. Die Unterseite des oben liegenden Gaskissens und die Oberseite des unten liegenden Gaskissens können dabei so gestaltet sein, daß das Kissengewebe beim Aufblasen am Schalenkörper des Kindersitzes vorbei bewegt wird oder den Schalenkörper nur im spitzen Winkel und gegebenenfalls annähernd tangential trifft, so daß nur eine geringe Krafteinwirkung auf den Kindersitz ausgeübt wird.

Um ein gezieltes Aufblasen des jeweiligen Gaskissens in zeitlicher Aufeinanderfolge derart, daß zunächst die beiden seitlichen Kissenteile und dann das mittlere Kissenteil aufgeblasen werden, zu erreichen, sind mehrere Kammern, d.h. wenigstens drei Kammern, vorgesehen, von denen zwei Kammern zum Aufblasen der beiden seitlichen Kissenteile dienen. Wenigstens eine Kammer dient zum Aufblasen des mittleren Kissenteils.

In bevorzugter Weise ist das Gaskissen in der Weise ausgebildet, daß die jeweilige beim Aufblasvorgang im Bereich des Füllvolumens des Gaskissens vorhandene Situation berücksichtigt wird. Insbesondere wird der Aufblasvorgang dabei in Abhängigkeit davon gesteuert, ob im Bereich des Aufblasvolumens im Fahrgastraum Gegenstände, beispielsweise ein Kindersitz oder eine Person mit einem Körperteil, insbesondere in "Out-Of-Position"-Stellung vorhanden ist. In Ausgestaltung der Erfindung kann die pro Zeiteinheit in die jeweiligen Kammern des Gaskissens gelieferte Gasmenge durch den ungehinderten Vorschub des Gaskissens in den Fahrgastraum gesteuert werden. Diese Steuerung findet bevorzugt in Echtzeit statt, wobei die jeweiligen Gaskammern des Gaskissens solange befüllt werden, bis während des Vorschubes ein Gegenstand den Vorschub des Gaskissens beim Entfalten behindert. Dies kann beispielsweise ein zu weit vorverlagertes Körperteil des Fahrzeuginsassen sein oder ein auf den Beifahrersitz angeordneter Kindersitz. Beifahrer, welche nicht in der normalen Sitzposition im Beifahrersitz sich befinden, sondern beispielsweise in einer vorverlagerten Stellung ("Out-Of-Position" z.B. beim Schlafen), können dem Vorschub des Gaskissens im Wege stehen. Die in das Gaskissen gelieferte Gasmenge wird dann so gesteuert, daß nur noch ein verringertes Füllvolumen an Gas eingebracht wird. Hierdurch wird die Verletzungsgefahr des Beifahrers oder eines im Kindersitz befindlichen Kindes erheblich verringert.

In bevorzugter Weise ist die in das Gaskissen gelieferte Gasmenge proportional einer abgetasteten Länge und/oder Zeit des ungehinderten Vorschubs des Gaskissens in den Fahrgastraum. Die Vorschubabtastung erfolgt während des Füllvorgangs, wobei die Steuerung des Füllvorgangs in Abhängigkeit vom Auftreten eines Hindernisses in das sich ausbreitende Füllvolumen des Gaskissens erfolgt. Der sich zeitlich an die Vorschubabtastung anschließende Füllvorgang wird bei Auftreten eines Hindernisses beendet. Hierdurch wird eine begrenzte Menge an Füllgas in das Gaskissen geliefert.

Die dem Gaskissen zugeführte Menge an Füllgas kann durch eine Ventilsteuerung eingestellt werden. Beispielsweise kann hierzu eine Blendenvorrichtung verwendet werden, welche die gewünschte Zufuhr der Gasmenge in die jeweiligen Kammern gewährleistet und die restliche vom Gasgenerator erzeugte Gasmenge so umleitet, daß sie nicht in das Gaskissen gelangt. Hierzu können eine oder mehrere gesteuerte Blenden im Gasströmungsweg zwischen der Gasquelle (pyrotechnischer Gasgenerator, Hybridgasgenerator oder dergleichen) und den jeweiligen Kammern, die mit dem Füllgas zu versorgen sind, vorgesehen sein.

In bevorzugter Weise erfolgt die Zuführung der Füllgasmenge in den Gassack stufenweise. Dies kann durch mehrere Gasgeneratoren erreicht werden, die in zeitlicher Aufeinanderfolge in Abhängigkeit von dem unbehinderten Vorschub des Gaskissens für den Füllvorgang angezündet werden. Als Kriterium für ein Hindernis kann die Vorschubgeschwindigkeit des Gaskissens, während des Füllvorgangs, abgetastet werden. Zur stufenweise Belieferung des Gaskissens, insbesondere in Abhängigkeit von der behinderungsfreien Vorschubabtastung, können die jeweiligen Kammern durch trennbare Verschlüsse, insbesondere Aufreisnähte, in mehrere Fächer unterteilt sein. Die Befüllung der Fächer erfolgt in Abhängigkeit von der jeweiligen Vorschubabtastung. Hierbei kann der Vorschub des mittleren Kissenteils und der jeweilige Vorschub der beiden seitlichen Kissenteile separat erfolgen, so daß in Abhängigkeit von dieser Abtastung jeweilige Fächer in diesen Kissenteilen gefüllt werden.

Die Zufuhr des Füllgases in das Gaskissen kann in der Weise erfolgen, daß bei fertig gefülltem Gaskissen im mittleren Kissenteil ein niedrigerer Fülldruck, insbesondere mit Normaldruck oder gering darüber vorliegt als in den beiden seitlichen Kissenteilen. Ferner kann der Füllgasdruck insbesondere im mittleren Kissenteil in Abhängigkeit vom Gewicht des auf dem Beifahrersitz befindlichen Fahrzeuginsassen eingestellt werden.

Zusätzlich kann am Beifahrersitz bei einem befestigtem Kindersitz ein Begrenzungsriegel aktiviert werden, welcher eine Verstellung des Beifahrersitzes nach vorne begrenzt. Hierdurch wird gewährleistet, daß bei verschiedenen Neigungsstellungen, insbesondere des Kopfteils des Rebord-Schalensitzes, auf diesen keine überhöhten Kräfte beim Aufblasen der Gaskissen ausgeübt werden.

Anhand der Figuren wird an Ausführungsbeispielen die Erfindung noch näher erläutert. Es zeigt:
- Fig. 1:: in perspektivischer Darstellung verschiedene Anordnungen von aufgeblasenen Gaskissen am Beifahrervordersitz in einem Kraftfahrzeug;
- Fig. 2:: in Draufsicht das aufgeblasene Gaskissen;
- Fig. 3:: ein Muster von Sollbruchlinien in einer Abdeckung, unter welcher das Gaskissen im Ruhezustand angeordnet ist;
- Fig. 4:: in schematischer Darstellung, das im Ruhezustand angeordnete Gaskissen;
- Fig. 5:: ein weiteres Ausführungsbeispiel der Erfindung in Draufsicht und in aufgeblasenem Zustand des Gaskissens;
- Fig. 6:: eine Seitenansicht einer in einem Fahrzeuginnenraum angeordneten Ausführungsform der Airbageinrichtung;
- Fig. 7:: ein Ausführungsbeispiel für eine Ventilsteuerung der Füllung des Gaskissens;
- Fig. 8:: ein Ausführungsbeispiel zur Anordnung des Gaskissens an einer Airbagwanne in Draufsicht;
- Fig. 9:: ein Blockschaltbild zur Erläuterung der gesteuerten Einstellung der Füllgasbeschickung des Gaskissens; und
- Fig. 10:: verschiedene Entfaltungsstufen des Gaskissens.

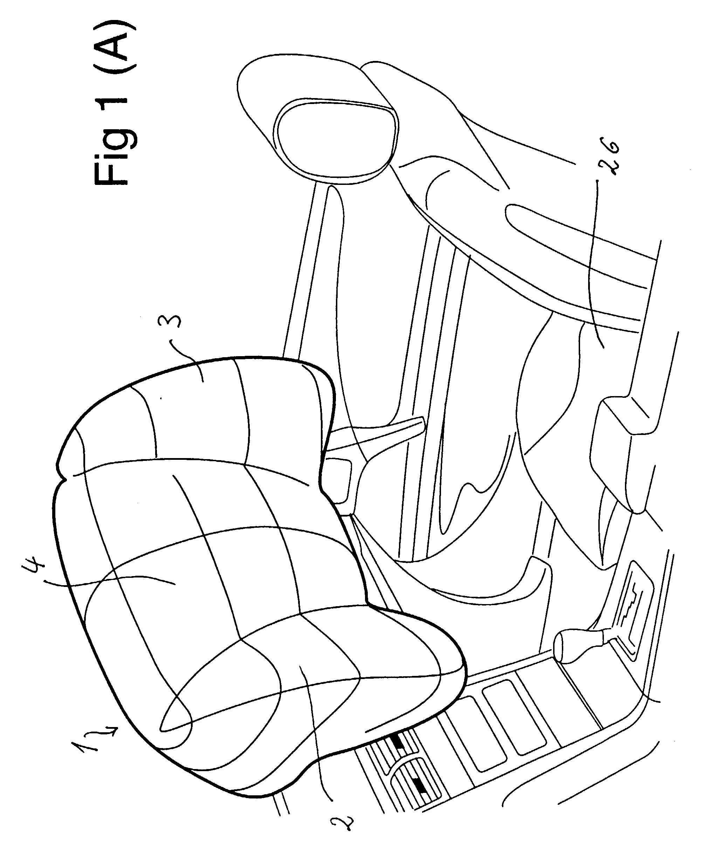

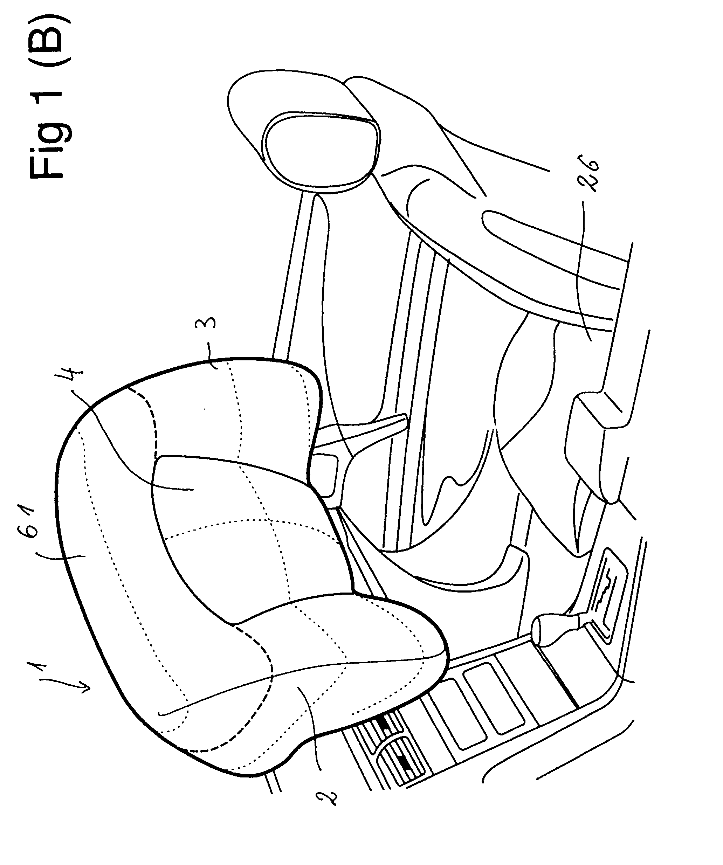

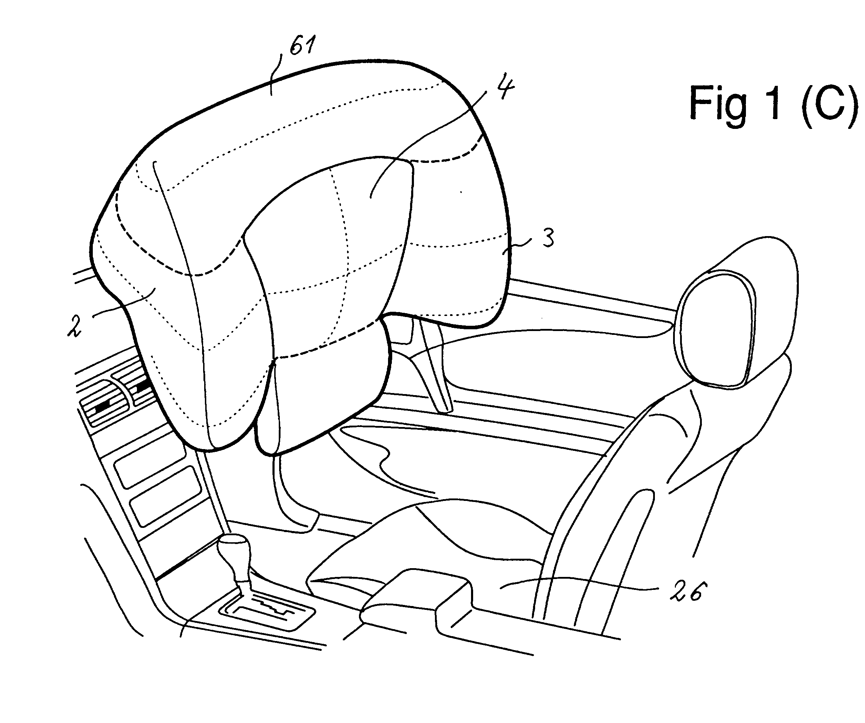

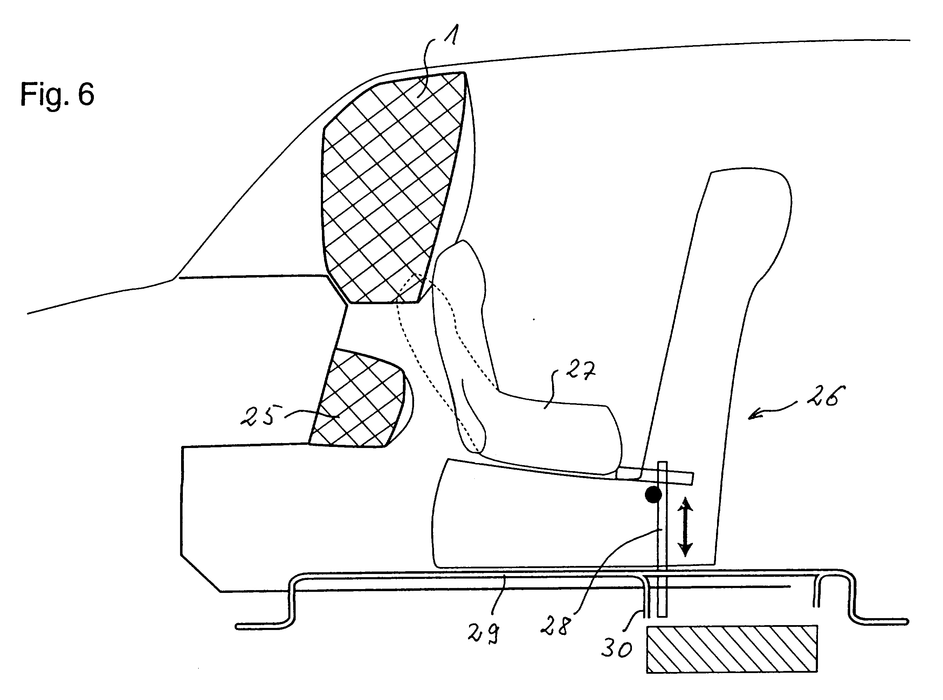

Die dargestellten Ausführungsbeispiele einer Airbagvorrichtung besitzen ein im Ruhezustand in der Instrumententafel untergebrachtes Gaskissen 1 und können ein im vertikalen Abstand davon angeordnetes unten liegendes Gaskissen 25 (Fig. 6) aufweisen. Das Gaskissen 1, von dem perspektivische Darstellungen verschiedener Ausführungsformen im aufgeblasenen Zustand in den Darstellungen (A), (B), (C) der Fig. 1 gezeigt sind, besitzt ein mittleres Kissenteil 4. Zu beiden Seiten dieses mittleren Kissenteils befinden sich seitliche Kissenteile 2, 3. Die seitlichen Kissenteile 2, 3 ragen mit einer größeren Strecke in den Fahrzeuginnenraum als das mittlere Kissenteil 4. Wie aus den Figuren zu ersehen ist, ragt das mittlere Kissenteil 4 im aufgeblasenen Zustand so weit in den Fahrzeuginnenraum, insbesondere vor einen Beifahrersitz 26, daß bei einem Unfall vorverlagerte Körperteile geschützt werden. Das obere Gaskissen 1 dient zum Schutz im Kopf- und Torax-Bereich, und das unten liegende Gaskissen 25 (Fig. 6) dient als Aufprallschutz im Kniebereich. Bei der Ausführungsform der Fig. 1(C) ist ein unterer, den unteren Teil der Instrumententafel umfassender Kissenansatz 62 für den Knieschutz angeformt.

Durch die beiden seitlichen Kissenteile 2, 3 wird erreicht, daß das Füllvolumen des gesamten Gaskissens 1 reduziert sein kann gegenüber herkömmlichen Gaskissen bei verbesserter Sicherheitsfunktion. Die verbesserte Sicherheitsfunktion ergibt sich vor allem dahingehend, daß auch dann, wenn der Fahrzeuginsasse in einer "Out-Of-Position"-Stellung sich auf dem Fahrzeugsitz befindet, durch die seitlichen Kissenteile 2, 3 ein sicherer Aufprallschutz gewährleistet wird. Die seitlichen Kissenteile wirken als Führungselemente für das vorverlagerte Körperteil in Richtung auf das mittlere Kissenteil 4 zu, welches dann den endgültigen Aufprallschutz gewährleistet. Da das mittlere Kissenteil 4, welches sich im wesentlichen über die gesamte Breite der Sitzposition erstreckt, nur ein reduziertes Füllvolumen aufweist und infolgedessen in einer reduzierten Strecke sich in den Fahrgastraum erstreckt, wird vermieden, daß bei vorverlagertem Körper des Fahrzeuginsassen, z.B. in Schlafposition oder beim Hantieren im Handschuhfach, der vorverlagerte Kopf des Fahrzeuginsassen mit überhöhter Kraft beim Aufblasen des Gaskissens getroffen wird. Ferner kann in bevorzugter Weise die Aufblas- und Entfaltungsrichtung im spitzen Winkel zur vertikalen Richtung oder annähernd vertikal nach oben erfolgen.

Wenn auf dem Beifahrervordersitz 26 ein Kindersitz 27, insbesondere in Form eines dargestellten Rebord-Schalensitzes, angeordnet ist, wird durch die Gestaltung des oberen Gaskissens 1 und/oder des unteren Gaskissens 25 gewährleistet, daß beim Aufblasen der Gaskissen keine überhöhten Kräfte auf den Kindersitz wirken unabhängig von der Neigung des Lehnenteils des Kindersitzes. In der ausgezogenen Sitzposition (mit relaltiv hoch gestellter Lehne des Kindersitzes ist die Anordnung so, daß das mittlere Kissenteil 4 des oben liegenden Gaskissens 1 den Kindersitz nicht berührt. In tiefer liegenden Neigungsstellungen des Kindersitzes, z.B. in der strichlierten Stellung in der Fig. 6 und darunter, befindet sich die Lehne des Kindersitzes 27 im Bereich des vertikalen Abstandes zwischen den beiden Gaskissen, so daß auch hier keine Kräfte auf den Kindersitz einwirken. Durch die beiden seitlichen Kissenteile 2 und 3 des oben liegenden Gaskissens 1 wird der Kindersitz seitlich abgesichert. Je nach Länge der Seitenteile 2 und 3 erreicht man einen zusätzlichen Seitenaufprallschutz.

Dadurch, daß die seitlichen Kissenteile 2, 3 im wesentlichen seitlich der normalen Sitzposition und auch der vorkommenden "Out-Of-Position"-Stellung auf der einen Seite beim Aufblasen bewegt werden, besteht keine Gefahr einer überhöhten Krafteinwirkung auf den Körper des Fahrzeuginsassen und auf den Kindersitz 27 beim Füllen des Gaskissens. Auf der einen Seite erstreckt sich das aufgeblasene seitliche Kissenteil 3 entlang der seitlichen Innenraumbegrenzung (Vordertür, seitliches Vorderfenster) in den Fahrzeuginnenraum. Auf der anderen Seite erstreckt sich das seitliche Kissenteil 2 etwa in die Längsmittelebene des Fahrzeuginnenraums.

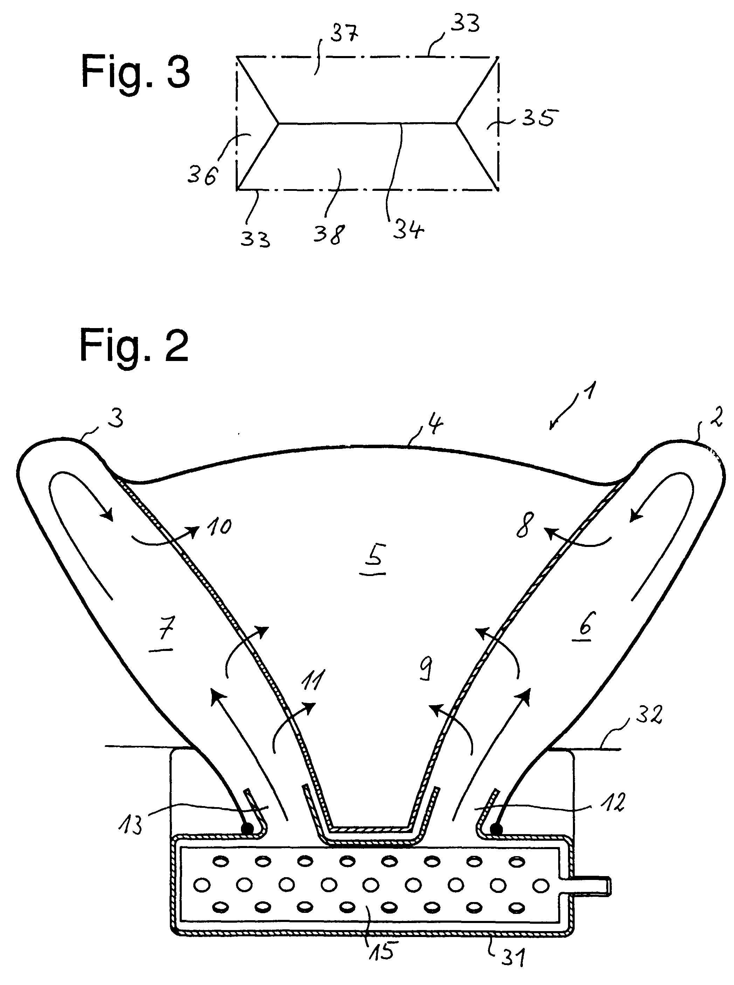

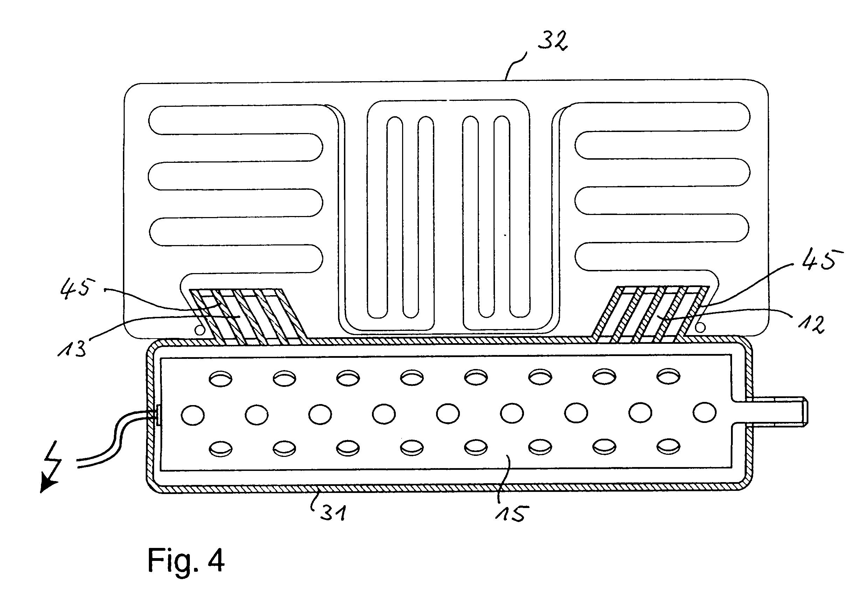

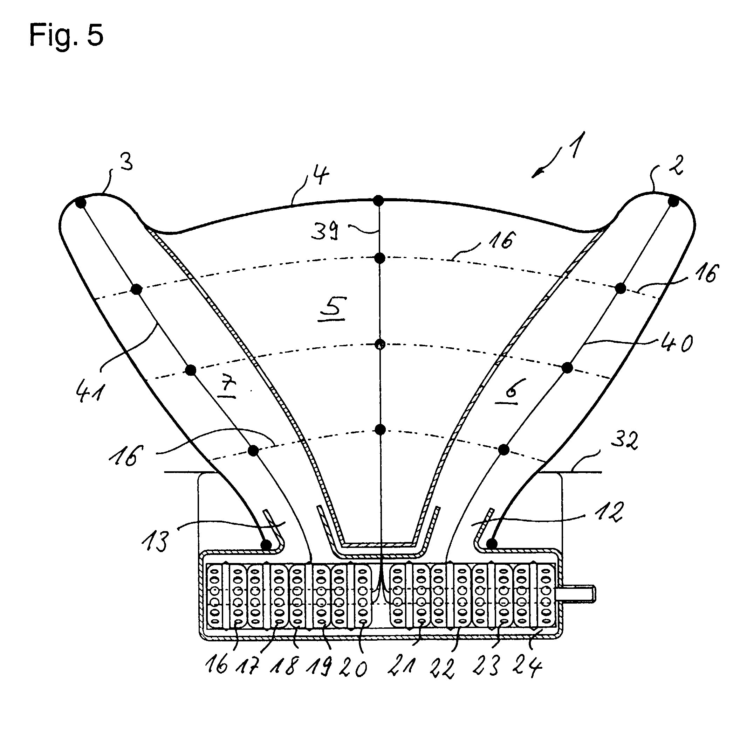

Wie insbesondere aus den Figuren 2 und 5 zu ersehen ist, werden die beiden seitlichen Kissenteile 2 und 3 im Winkel schräg nach außen, aus der in der Figur 4 gezeigten Ruheposition entfaltet und aufgeblasen. Mit Hilfe von Gasführungen 12 und 13 können den Kammern 6 und 7 der seitlichen Kissenteile 2 und 3 zugeordnete schräg nach außen gerichtete Gasströmungen erzeugt werden. In horizontaler Ausdehnung ist die Breite des jeweiligen seitlichen Kissenteils 2, 3 geringer als die des mittleren Kissenteils 4. Beim Aufblasen bzw. Entfalten der seitlichen Kissenteile 2 und 3 werden Öffnungen für Strömungswege 8, 9 und 10, 11 aus den seitlichen Kammern 6 und 7 in eine mittlere Kammer 5 des mittleren Kissenteils 4 geöffnet. Hierfür können speziell geformte Schlitze oder auch Ventile vorgesehen sein, welche nach dem Entfalten der seitlichen Kissenteile 2 und 3 in die mittlere Kammer 5 geöffnet sind. Bei dem in der Figur 2 dargestellten Ausführungsbeispiel wird das Füllgas von einem Gasgenerator 15 erzeugt. Der Gasgenerator 15 kann in bekannter Weise ausgebildet sein und an seinem Umfang Gasauslaßöffnungen aufweisen. Nach dem Zünden des Gasgenerators 15, welches durch einen fahrzeugsensitiven Beschleunigungssensor veranlaßt werden kann, wird ausströmendes Gas von einer den Gasgenerator 15 umfassenden Umhüllung 31 gesammelt und durch die Gasführungen 12, 13 zuerst in die Kammern 6 und 7 der seitlichen Kissenteile 2 und 3 eingeleitet. Anschließend werden die Gasströme in den aufgeblasenen Kissenteilen 2 und 3 durch die geschaffenen Öffnungen entlang der Strömungswege 8 und 9 und 10 und 11 in die Kammer 5 des mittleren Kissenteils 4 geleitet. Die Gasströmungswege sind durch Pfeile in der Figur 2 verdeutlicht. Gegebenenfalls kann eine Umlenkung der Gasströme in den entfalteten seitlichen Kissenteilen 2 und 3 zu den Öffnungen in den Gasströmungswegen 8 und 10 erfolgen. Die Füllung des mittleren Kissenteils 4 erfolgt zeitverzögert gegenüber der Füllung der seitlichen Kissenteile 2 und 3, wobei der Zeitunterschied ca. 10 bis 12 ms betragen kann.

Hierdurch erreicht man ein "sanftes Aufblasen" des Gaskissens 1 aufgrund einer zeitverzögerten Gasstromführung in einem Mehrkammersystem des Gaskissens.

Durch den zeitlich vorgeschobenen Druckaufbau in den seitlichen Kissenteilen 2 und 3 erreicht man eine Einweiserfunktion, durch die etwa V-geformte Kontur der seitlichen Kissenteile 2 und 3. Bei einer "Out-Of-Position"-Stellung des Fahrzeuginsassen wird ein Abrutschen außerhalb des Airbagbereiches verhindert. Durch die beiden im Winkel zueinander gerichteten seitlichen Kissenteile wird eine zur Mitte des Gaskissens hin gerichtete Einweiserfunktion erreicht. Zu dem Zeitpunkt, in welchem die maximale Unfallschwere auftritt, ist auch das mittlere Kissenteil 4 aufgeblasen, so daß die volle Sicherheitsfunktion erreicht wird.

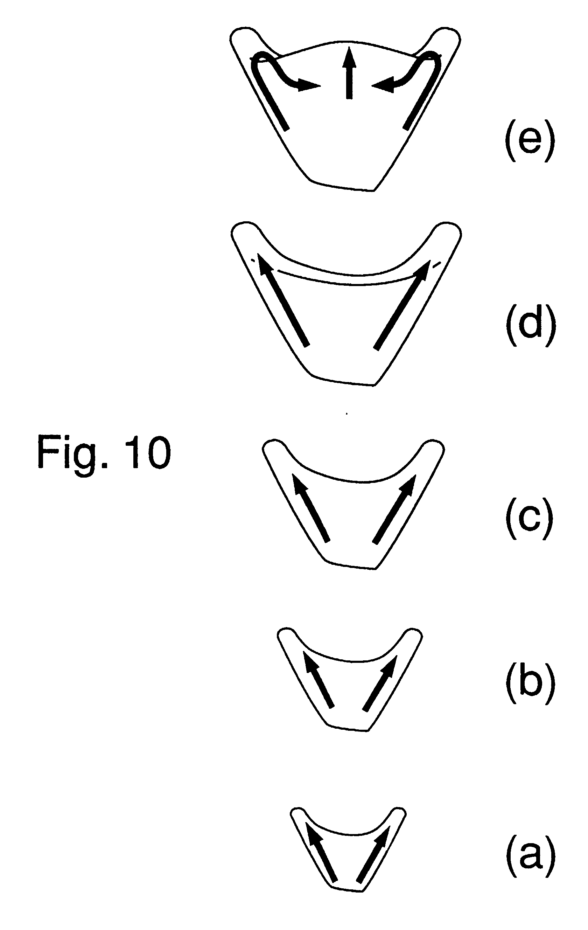

Die Befüllung des Gaskissens erfolgt so, daß die beiden seitlichen Kissenteile 2 und 3 etwa V-förmig sich öffnend aus der Airbagwanne, in welcher sie im Ruhezustand angeordnet sind, sich nach außen entfalten. Die Figur 10 zeigt von unten nach oben verschiedene aufeinanderfolgende Entfaltungsstufen (a) bis (e) des Gaskissens. Der Körper, insbesondere Kopf- und Toraxbereich des vorverlagerten Fahrzeuginsassen wird vom Gaskissen auch an seinen beiden Seiten erfaßt. Das Gewebe, welches das mittlere Kissenteil umgibt, wird segelartig zwischen den beiden seitlichen Kissenteilen gespannt. Es kann daher im mittleren Kissenteil 4 ein geringerer Fülldruck aufgebaut werden als in den beiden seitlichen Kissenteilen, wodurch ein weiches Einsinken des vorgelagerten Körpers des Fahrzeuginsassen mit ausreichender Schutzfunktion erreicht wird. Die beiden seitlichen Kissenteile 2 und 3 umfassen den eingetauchten Körper des Fahrzeugsinsassen von der Seite und gewähren so auch einen Seitenaufprallschutz.

Bei den beiden in der Fig. 1 dargestellten Ausführungsformen der Darstellungen (B) und (C) ist an der Oberseite des Gaskissens ein Verbundkissenteil 61, über welches die beiden Kammern 6 und 7 der beiden seitlichen Kissenteile 2 und 3 miteinander verbunden sind, vorgesehen. Die Befüllung dieses oberen Verbundkissenteils 61 kann über die Kammern 6 und 7 der seitlichen Kissenteile erfolgen. Durch dieses Verbundkissenteil 61 wird nach oben für den eingetauchten Körper des Fahrzeuginsassen eine zusätzliche Schutzfunktion gewährleistet.

Bei den dargestellten Ausführungsbeispielen ragen die seitlichen Kissenteile 2 und 3 weiter in den Fahrgastraum als das mittlere Kissenteil 4. Es ist jedoch auch möglich, daß das mittlere Kissenteil 4 mit dem äußersten Rand seiner Wölbung sich gleich weit oder etwas weiter in den Fahrgastraum schiebt als die jeweiligen äußeren Kanten der seitlichen Kissenteile 2 und 3.

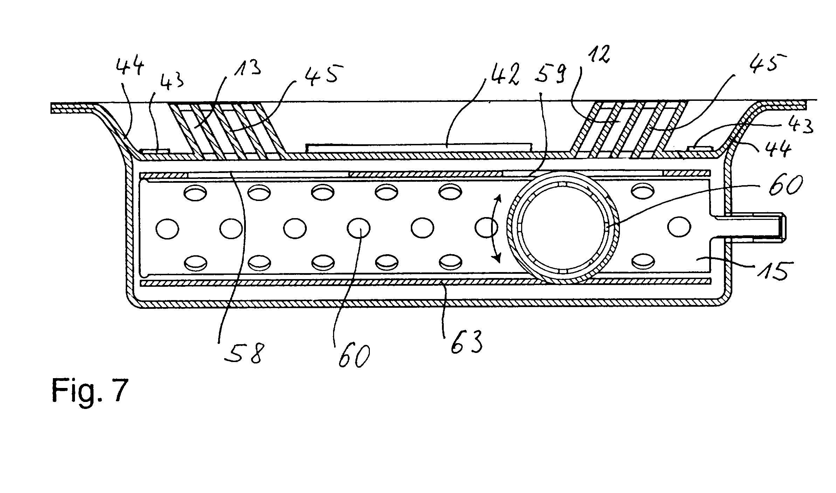

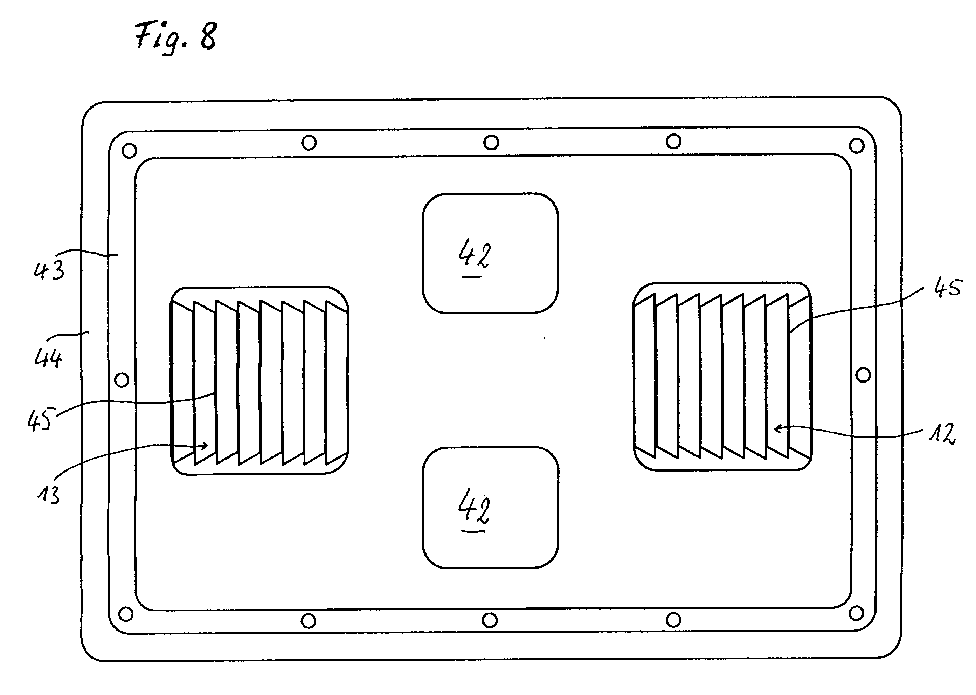

Zur Unterstützung der winkelgerichteten Gasströme in die Kammern 6 und 7 sind die Gasführungen 12 und 13 gegenüber einer vertikalen Mittelebene im Winkel nach außen gerichtet und können zusätzliche Leitbleche 45 (Fig. 7, 8) aufweisen. Zur Unterstützung der gewünschten Entfaltung ist das Gaskissen 1 im Ruhezustand (Fig. 4) in einer separaten Kammerfaltung (Sektionsfaltung) in einem Airbagfach angeordnet. Hierdurch wird die oben erläuterte Entfaltung der Kissenteile 2, 3 und 4 erreicht. In einer Abdeckung 32, unter welcher das Gaskissen in dem Airbagfach im Ruhezustand gefaltet ist, können in bevorzugter Weise linienförmige Schwachstellen bzw. Sollbruchstellen 34 eingeformt sein, die die geschilderte Entfaltung unterstützen. Eine geeignete Form derartiger Schwachstellen, insbesondere an der Innenseite der Abdeckung 32 ist in der Figur 3 dargestellt. Hierdurch werden in strichpunktierten Linien 33 gezeigte Scharniere gebildet, um welche die von den Sollbruchlinien 34 gebildeten Klappen beim Öffen der Abdeckung 32 geschwenkt werden. Bei der in Figur 3 dargestellten Ausführungsform, werden zwei seitliche dreieckförmige Klappen 35 und 36 und in der Mitte dazwischen zwei trapezförmige Klappen 37 und 38 gebildet.

An Stelle eines Gasgenerators können auch mehrere Gasgeneratoren, welche den jeweiligen Kammern zugeordnet sind, zum Einsatz kommen, wobei bei der in der Figur 2 gezeigten Ausführungsform jeder Kammer 5, 6, und 7 ein Gasgenerator zugeordnet sein kann.

Bei dem in der Figur 5 dargestellten Ausführungsbeispiel sind die Kammern 5, 6 und 7 durch auftrennbare Zwischenwände 16, welche im jeweils teilweise gefüllten Zustand des Gaskissens sich senkrecht zur Vorschubrichtung erstrecken, jeweils in mehrere Fächer (drei Fächer beim dargestellten Ausführungsbeispiel) unterteilt. Die Trennwände 16 werden bevorzugt durch Aufreißnähte ausgebildet, welche durch den stufenweise von den jeweils den Fächern zugeordneten Gasgeneratoren 16 bis 24 erzeugten Fülldruck, aufgerissen werden. Die Aufreißnähte verlaufen bevorzugt parallel zur jeweiligen Faltung des Kissenteils.

Bei dieser Ausführungsform wird ferner die Vorschubgeschwindigkeit bevorzugt im Bereich jedes Kissenteils abgetastet. Wenn sich die Vorschubgeschwindigkeit ändert, ist dies ein Merkmal für ein Hindernis im Ausbreitungsweg des jeweiligen Kissenteils 2, 3, 4. Zur Abtastung der Vorschubgeschwindigkeit dienen den jeweiligen Kissenteilen zugeordnete Schnüre 39, 40 und 41. Diese Schnüre sind mit jeweils vorderen Ende der Kissenteil 2, 3 und 4 verbunden. Beim Aufblasen der Kissenteile wird die Geschwindigkeit, mit welcher die jeweiligen Schnüre 39, 40, 41 ausgezogen werden, gemessen. Wenn ein Abfall der Vorschubgeschwindigkeit eintritt, wird der Gasgenerator der dem nächstfolgenden Fach zugeordnet ist, nicht gezündet, so daß die entsprechende Trennwand bzw. Aufreißnaht 16 in der jeweiligen Kammer geschlossen bleibt. Hierdurch wird gewährleistet, daß selektiv bei den jeweiligen Kissenteilen 2, 3 und 4 die Vorschublänge in den Fahrzeuginnenraum nur so weit geht, bis ein Hindernis im Vorschubweg des jeweiligen Kissenteils vorliegt. Gleichzeitig wird jedoch auch bei einer Teilaufblasung der jeweiligen Kammern der Kissenteile ein straffes Gaskissen erreicht, welches bei einem Aufprall die erforderliche Sicherheitsfunktion ausübt.

Wenn beispielsweise nach dem Aufblasen der ersten beiden Fächer in einer jeweiligen Kammer 5, 6, 7 im Vorschubweg ein Hindernis z.B. ein Körperteil des Fahrzeuginsassen liegt, wird das Aufblasen des nächstfolgenden Faches in der jeweiligen Kammer, durch Nichtzünden des zugeordneten Gasgenerators verhindert, so daß die jeweilige Trennwand 16 bzw. Aufreißnaht geschlossen bleibt. Die Abtastung der Vorschubbewegung kann in der Weise erfolgen wie es in der DE-A-196 11 384 beschrieben ist.

Bei der Bewegung des jeweiligen Kissenteils 2, 3 und 4 in den Fahrgastraum werden auch die zugeordneten Bänder bzw. fadenförmigen Abtastmittel 30, 40, 41 mitbewegt. Die Bewegung wird von einer Abtasteinrichtung 46 festgestellt. Wenn sich in dem Auskleidungsweg der jeweiligen Kissenteile ein Hindernis befindet, wird die Auskleidungsgeschwindigkeit abgebremst. Hierdurch wird auch die Auszugsgeschwindigkeit des Abtastmediums 39, 40, 41 gebremst, d.h. die pro Zeiteinheit von der Abtasteinrichtung 46 abgetastete Vorschubbewegung wird abgebremst . Aus dem Meßsignal der Abtasteinrichtung 46 wird während der Vorschubbewegung und damit während der Auszugsbewegung des jeweiligen Abtastmediums 30, 40, 41 ein der abgetasteten Strecke entsprechendes Signal von einer an die Abtasteinrichtung 46 angeschlossenen Einrichtung 47 (Vorschublängeneinrichtung) gebildet. Gleichzeitig kann auch ein von der Vorschubzeit (Abtastzeit) abhängiges Signal durch eine an die Abtasteinrichtung 46 angeschlossene Einrichtung 48 (Vorschubzeiteinrichtung) gebildet werden. Sowohl die Einrichtung 47 zur Erfassung der Abtastlänge als auch die Einrichtung 48 zur Erfassung der Vorschub-bzw. Abtastzeit liefern ihre Ausgangssignale an eine Einrichtung 49 zur Bestimmung der Abtastgeschwindigkeit. Das von der Einrichtung 49 gebildete Signal entspricht der Geschwindigkeit, mit welcher der Vorschub des jeweiligen Gaskissenteils 2, 3, 4 während des Füllvorgangs erfolgt. Während des ungehinderten Vorschubs des Gaskissens ändert sich die Abtastgeschwindigkeit kontinuierlich bis zu einem Endgeschwindigkeitswert.

Mit Hilfe einer an die Einrichtung 49 angeschlossenen Einrichtung 50 läßt sich eine diskontinuierliche Änderung der Auszugsgeschwindigkeit feststellen. Die Einrichtung 50 stellt eine Diskontinuität des Vorschubgeschwindigkeitssignals, welches die Einrichtung 49 bildet, fest. Diese Diskontinuität kann beim Abbremsen der Vorschubbewegung des jeweiligen Gaskissenteils durch ein Hindernis auftreten. Die Einrichtung 50 liefert zu diesem Zeitpunkt ein Stopsignal an eine Einrichtung 51, in welcher fortlaufend die Ist-, Vorschub- bzw. Abtastzeit, beispielsweise durch eine entsprechend ausgebildete Zelleinrichtung während der Vorschubbewegung bestimmt wird. Die Einrichtung 51 kann hierzu an die Einrichtung 48 angeschlossen sein. Gleichzeitig kann die Einrichtung 50 ein entsprechendes Stopsignal an eine an die Einrichtung 47 angeschlossene Einrichtung 52 liefern, welche während der Vorschubbewegung die jeweilige Ist-Abtastlänge feststellt. Wenn das Stopsignal von der Einrichtung 50 an die Einrichtung 52 geliefert wird, stoppt diese den entsprechenden Zellvorgang, so daß die Abtastlänge der Vorschubbewegung zum Zeitpunkt der aufgetretenen Diskontinuität, insbesondere bei der Abbremsung durch ein Hindernis bestimmt ist. Beide Einrichtungen 51 und 52 oder eine der beiden Einrichtungen liefern ein dem Abtastzeitende bzw. dem Abtastlängenende proportionales Signal an einen Vergleicher 53 und/oder Vergleicher 55. Der Vergleicher 53 ist mit einem Speicher 54 verbunden, in welchem die zum Füllen des gesamten Füllvolumens des Gaskissens, insbesondere des jeweiligen Füllvolumens der einzelnen Kissenteile 2, 3, 4 erforderliche Gesamtzeit gespeichert ist. Eine an den Vergleicher 55 angeschlossene Speichereinrichtung 56 enthält einen der gesamten Auszugsstrecke des jeweiligen Abtastmediums (Schnüre bzw. Bänder 39, 40, 41) entsprechenden Wert.

Wenn während der Abtastung beim Füllvorgang ein Hindernis beispielsweise in Form eines Kindersitzes oder eines vorverlagerten Körperteils des Fahrzeuginsassen die Vorschubbewegung des jeweiligen Kissenteils 2, 3, 4 behindert, wird durch die Einrichtung 50, bevor die gesamte Länge des Abtastmediums ausgezogen ist, das Stopsignal an die Einrichtung 51 und/oder Einrichtung 52 geliefert. Das abgetastete Zeitende und/oder die abgetastete Auszugslänge sind dann geringer als die in den Speichern 54 und/oder 56 gespeicherten Werte für die Abtastzeit und die Abtastlänge. Im jeweiligen Speicher 53 und/oder 55, welcher als Quotientenbilder ausgebildet sein kann, wird ein Vergleich zwischen der tatsächlichen Ist-Abtastzeit, von welcher die Einrichtung 51 ein entsprechendes Signal liefert, und der Gesamtzeit, die bei unbehindertem Gesamtvorschub gegeben ist und im Speicher 54 abgelegt ist, durchgeführt. Ferner kann ein Quotient gebildet werden aus der tatsächlich abgetasteten Auszugslänge des Abtastmediums, von der die Einrichtung 52 ein entsprechendes Signal liefert, mit der Gesamtauszugslänge, von der ein entsprechender Wert im Speicher 56 abgelegt ist. Beide oder einer der beiden so gebildeten Quotienten werden einer Steuereinrichtung 57 zugeführt. Die Steuereinrichtung 57 ist mit den Zündeinrichtungen, welche den jeweiligen Gasgeneratoren 16 bis 24 zugeordnet sind, verbunden. Hierdurch wird eine Steuerung der jeweiligen Gasgeneratorenzündung zur Befüllung der entsprechenden Fächer in den Kammern 5, 6, 7 der Gaskissenteile 2, 3, 4 erreicht.

Die Anzahl der jeweils gezündeten Gasgeneratoren entspricht dem Quotienten, der von der Vergleichseinrichtung 53 und/oder 55 gebildet wurde. Die Zündung der einzelnen Gasgeneratoren kann in zeitlicher Aufeinanderfolge geschehen. Auf diese Weise wird erreicht, daß dann, wenn ein Hindernis im Vorschubweg des jeweiligen Gaskissenteils sich befindet, nur eine begrenzte Anzahl der zugeordneten Gasgeneratoren 16 bis 24 zum Füllen der entsprechenden Fächer in den Kammern der Gaskissenteile gezündet wird. Die auf das Hindernis einwirkende Kraft ist aufgrund des veringerten Füllvolumens geringer als beim voll gefüllten Gaskissen 1.

In gleicher Weise kann in Abhängigkeit von dem Quotientenwert den der Vergleicher 53 und/oder Vergleicher 55 liefert, eine Ventilsteuerung in der Weise durchgeführt werden, daß eine entsprechende Gasmenge dem jeweiligen Kissenteil zugeleitet wird, so daß der entsprechende Befüllungsgrad im Gaskissen erreicht ist. Hierzu kann eine in Fig. 7 dargestellte Blendeneinrichtung verwendet werden, welche als kreiszylindrische Blende ausgebildet ist und den Außenmantel des Gasgenerators 15 umgibt. In der Fig. 7 ist sowohl der Querschnitt des Gasgenerators 15 als auch der Blende 63 dargestellt. Der Gasgenerator 15 besitzt an seinem Umfang Gasauslaßöffnungen 60, die gleichmäßig in axialer Länge und in Umfangsrichtung verteilt sind. Die ausströmende Gasmenge wird durch die von der Blende 63 vermittelte axiale Führung und Umfangsführung zu Blendenöffnungen 58 und 59 geführt, welche beim Beginn des Füllvorgangs mit den Gasführungen 12, 13 des Defusers fluchten. In den Gasführungen 12, 13 können Leitbleche 45 vorgesehen sein, welche die Spreizwirkung beim Entfalten der seitlichen Kissenteile 2, 3 unterstützen.

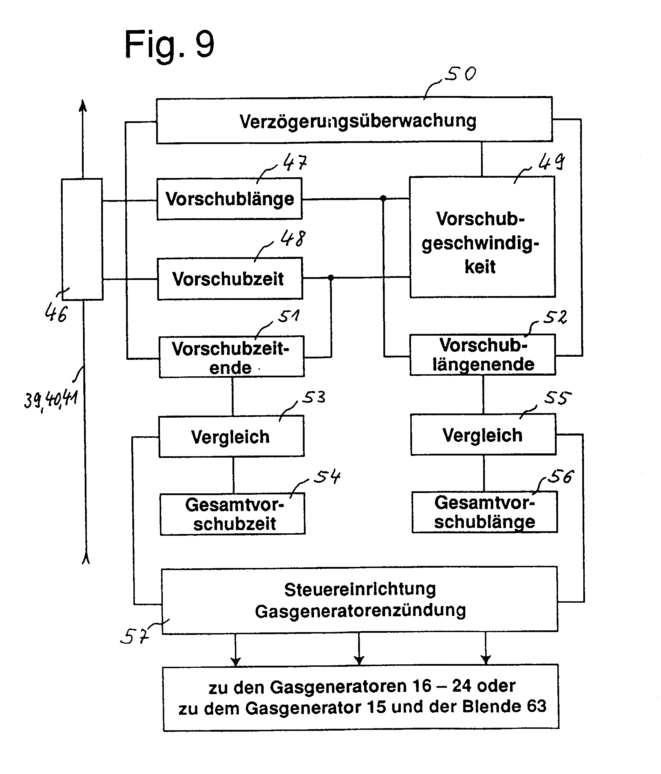

Solange ein ungehinderter Vorschub der Kissenteile erfolgt, wird die vom Gasgenerator 15 abgegebene Gasmenge im zylindrischen Hohlraum der Blende gesammelt und strömt aus den Blendenöffnungen 58 und 59 in die zugeordneten Gasführungen 12 und 13 zum Befüllen der seitlichen Kissenteile 2 und 3. Sobald der Vorschub durch ein Hindernis gehemmt wird, findet die im Zusammenhang mit der Fig. 9 erläuterte Aktivierung der zugeordneten Steuereinrichtung 57 statt. In Abhängigkeit von dem Quotientenwert, den der bzw. die Vergleicher 53 und/oder 55 liefern, werden in den entsprechenden Kissenteilen noch die entsprechenden Fächer der Kammern gefüllt. Das weitere Befüllen wird durch Drehen der Blende 63 unterbrochen. Dabei werden die Blendenöffnungen 58, 59 von ihren den Gasführungen 12, 13 gegenüber liegenden Positionen wegbewegt und das Gas in eine andere Richtung umgeleitet. Durch die Gasführungen 12, 13 wird kein Gas mehr zugeführt. Diese sind durch den Zylindermantel der Blende 63 abgedeckt.

Im Ausführungsbeispiel ist eine einteilige Blende dargestellt. Es ist jedoch auch möglich, die Blende 63 zweiteilig auszubilden, so daß separat der Blendenteil, welcher die Blendenöffnung 58 enthält, und der Blendenteil, welcher die Blendenöffnung 59 enthält, gesteuert werden können.

Falls die Befüllung des mittleren Kissenteils ebenfalls über eine zugeordnete Gaszuführung erfolgt, kann auch die dieser Gaszuführung zugeordnete Blendenöffnung separat gesteuert werden. Auf diese Weise läßt sich eine selektive Befüllung der jeweiligen Kammern in Abhängigkeit von unbehindertem Vorschub des jeweiligen Kissenteils erreichen, wobei für jedes Kissenteil eine in der Fig. 9 dargestellte Überwachungs- und Steuereinrichtung vorgesehen ist.

Die Steuerung der Füllgaszufuhr kann auch in der Weise erfolgen, daß in beliebigen der schematisch in der Fig. 10 dargestellten Füllstufen (a) bis (e) der Füllvorgang in Abhängigkeit vom ungehinderten Vorschub des sich entfaltenden Gaskissens angehalten ist.

In der Fig. 8 ist eine Draufsicht auf das Ausführungsbeispiel der Fig. 7 dargestellt. Hierbei wird das Gaskissen an seinem Rand mit einem umlaufenden Befestigungsrahmen 43 fest mit dem Boden einer Airbagwanne 44 verbunden. Die Airbagwanne 44 kann integraler Bestandteil einer Instrumententafel sein. Beim dargestellten Ausführungsbeispiel ist der Gasgenerator 15 unmittelbar unter der Airbagwanne 44 angeordnet und kann mit dieser zu einem Modul verbunden sein. Es ist jedoch auch möglich, den Gasgenerator 15 getrennt von der Airbagwanne anzuordnen, wobei dann in gleicher Weise wie die Gaszuführungen 12, 13 entsprechende Fortsätze an die Airbagwanne angeformt sind, zu denen das von der Blende 63 eingeblendete Gas geleitet wird. Hierzu sind der Gasgenerator 15 und die um seinen Umfang angeordnete drehbare ringförmige Blende an einem geeigneten Ort, insbesondere an einem festen Teil des Fahrzeugaufbaus, fest angeordnet. Falls auch für das mittlere Kissenteil 4 eine separate Gaszuleitung vorgesehen ist, wird auch hierfür eine entsprechende Anformung an der Airbagwanne 44 vorgesehen.

Ferner ist an der Rückseite der Kammer 5 des mittleren Kissenteils ein Überdruckventil 42, beispielsweise in Form von einer oder mehreren Ventilklappen (zwei Ventilklappen beim Ausführungsbeispiel) vorgesehen. Dieses Überdruckventil öffnet, wenn in der Kammer 5 des mittleren Kissenteils 4 ein Fülldruck herrscht, der den eingestellten Sollwert überschreitet. Dies kann beispielsweise dann geschehen, wenn der Körper des Beifahrers in den mittleren Kissenteil 4 eintaucht. Hierdurch wird gewährleistet, daß das Kissengewebe nicht wie eine harte Wand wirkt, sondern das eintauchende Körperteil sanft auffängt.

Wie aus der Fig. 6 zu ersehen ist, stützt sich das oben liegende Gaskissen 1 im Bereich des Armaturenbrettes und auch in einem sich an die Frontscheibe anschließenden Dachbereich und zum Teil an der Frontscheibe des Kraftfahrzeuges ab. Hierdurch erreicht man ebenfalls eine Verringerung des Füllvolumens und der beim Aufblasen wirkenden Kräfte.

Am Beifahrersitz 26 kann ferner ein Begrenzungsriegel 28 (Fig.6) vorgesehen sein, welcher beim Befestigen des Kindersitzes 27 in einem Begrenzungsfreiraum einer fahrzeugfesten Unterschiene 29 eintaucht. Der Begrenzungs- bzw. Bewegungsfreiraum für den Fahrzeugsitz ist nach vorne hin begrenzt durch einen Anschlag 30. Hierdurch wird gewährleistet, daß bei am Beifahrersitz 26 befestigten Kindersitz 27 der Beifahrersitz 26 nur in eine Position gebracht werden kann, in welcher keine überhöhten Krafteinwirkungen auf den Kindersitz in den verschiedenen Neigungsstellungen der Lehne des Kindersitzes einwirken. Durch den Anschlag 16 wird die vordere Position begrenzt. Hierdurch wird ein Sicherheitsabstand gewährleistet.

## Patentansprüche

1. Beifahrerairbag mit einem im Normalbetrieb in einer Instrumententafel eines Kraftfahrzeugs angeordneten und infolge einer Sensorauslösung mit einem Füllgas aufblasbaren Aufprallschutz, der in drei separat aufblasbare Kammern umfassende Kissenteile, nämlich ein mittleres Kissenteil und zwei seitliche Kissenteile unterteilt ist,
dadurch **gekennzeichnet,**daß
- an einer den Gasgenerator (15) umfassenden Umhüllung (31) oder an einer Airbagwanne (44), an welcher das Gaskissen befestigt ist, Gasführungen (12, 13) bildende Fortsätze vorgesehen sind, welche in die beiden seitlichen Kissenteile (2, 3) bezüglich einer vertikalen Mittelebene im Winkel schräg nach außen gerichtet sind,
- die beiden seitlichen Kissenteile (2, 3) zeitlich vor dem mittleren Kissenteil (4) füllbar sind; und
- durch das Entfalten der beiden gefüllten seitlichen Kissenteile (2, 3) Strömungswege (8 - 11) für das Füllgas aus den beiden seitlichen Kissenteilen (2, 3) in das mittlere Kissenteil (4) geöffnet sind.

2. Beifahrerairbag nach Anspruch 1, dadurch gekennzeichnet, daß die seitlichen Kissenteile (2, 3) im aufgeblasenen Zustand zumindest einen Abstand voneinander aufweisen, welcher der Breite eines Kindersitzes (9) entspricht.

3. Baifahrerairbag nach einem der Ansprüche 1 oder 2, dadurch gekennzeichnet, daß die seitlichen Kissenteile (2, 3) im aufgeblasenen Zustand weiter in den Fahrzeuginnenraum ragen als das mittlere Kissenteil (4).

4. Beifahrerairbag nach einem der Ansprüche 1 bis 3, dadurch gekennzeichnet, daß das Gaskissen (1) wenigstens drei Kammern (5, 6, 7) aufweist, von denen zwei Kammern (6, 7) zum Aufblasen der beiden seitlichen Kissenteile (2, 3) und wenigstens eine Kammer (5) zum Aufblasen des mittleren Kissenteils (4) dienen.

5. Beifahrerairbag nach einem der Ansprüche 1 bis 4, dadurch gekennzeichnet, daß die beiden seitlichen Kissenteile (2, 3) über ein Verbundkissenteil (39) bevorzugt an ihren oberen Enden verbunden sind.

6. Beifahrerairbag nach Anspruch 5, dadurch gekennzeichnet, daß das Verbundkissenteil (39) über die Kammern (6, 7) der beiden seitlichen Kissenteile (2, 3) gefüllt sind.

7. Beifahrerairbag nach einem der Ansprüche 1 bis 6, dadurch gekennzeichnet, daß das Gaskissen (1) mit separater Kammerfaltung in einem Fach unterhalb einer Abdeckung (32), welche Sollbruchstellen (34) aufweist, im Ruhezustand angeordnet ist.

8. Beifahrerairbag nach einem der Ansprüche 1 bis 7, dadurch gekennzeichnet, daß die pro Zeiteinheit in die jeweiligen Kammern (5, 6, 7) gelieferte Gasmenge durch den ungehinderten Vorschub des Gaskissens (1) in den Fahrgastraum gesteuert ist.

9. Beifahrerairbag nach Anspruch 8, dadurch gekennzeichnet, daß die in die jeweiligen Kammern (5, 6, 7) gelieferte Gasmenge proportional einer abgetasteten Länge des ungehinderten Vorschubes des Gaskissens (1), insbesondere des jeweiligen Kissenteils (2, 3, 4, 39) in den Fahrgastraum ist.

10. Beifahrerairbag nach Anspruch 8 oder 9, dadurch gekennzeichnet, daß der sich zeitlich an die Vorschubabtastung anschließende Füllvorgang in Abhängigkeit von der abgetasteten Vorschublänge und/oder - zeit beendbar ist.

11. Beifahrerairbag nach einem der Ansprüche 8 bis 10, dadurch gekennzeichnet, daß die den jeweiligen Kammern (5, 6, 7) zugeführte Füllgasmenge stufenweise zuführbar ist.

12. Beifahrerairbag nach einem der Ansprüche 8 bis 11, dadurch gekennzeichnet, daß von einer durch eine Füllgasquelle (15; 16 bis 24) gelieferte Gasmenge eine dem ungehinderten Gaskissenvorschub proportionale Teilgasmenge den jeweiligen Kammern (5, 6, 7) des Gaskissens (1) zugeleitet ist und die restliche Gasmenge umgeleitet ist.

13. Beifahrerairbag nach einem der Ansprüche 8 bis 12, dadurch gekennzeichnet, daß die den jeweiligen Kammern (5, 6, 7) gelieferte Gasmenge durch Ventilsteuerung eingestellt ist.

14. Beifahrerairbag nach einem der Ansprüche 8 bis 13, dadurch gekennzeichnet, daß die den jeweiligen Kammern (5, 6, 7) gelieferte Gasmenge durch eine oder mehrere gesteuerte Blenden (41), die im Strömungsweg zwischen der Gasquelle (15; 16 bis 24) und den jeweiligen Kammern (5, 6, 7) vorgesehen ist bzw. sind, eingestellt ist.

15. Beifahrerairbag nach einem der Ansprüche 1 bis 14, dadurch gekennzeichnet, daß in der Abtastphase die ungehinderte Vorschublänge und/oder -zeit erfaßbar ist.

16. Beifahrerairbag nach einem der Ansprüche 8 bis 15, dadurch gekennzeichnet, daß in der Abtastphase die Vorschubgeschwindigkeit abtastbar und eine Verringerung der Vorschubgeschwindigkeit erfaßbar ist.

17. Beifahrerairbag nach einem der Ansprüche 8 bis 16, dadurch gekennzeichnet, daß zum Füllen der jeweiligen Kammern (5, 6, 7) des Gaskissens (1) mehrere Gasgeneratoren (16 - 24) vorgesehen sind.

18. Beifahrerairbag nach Anspruch 17, dadurch gekennzeichnet, daß die Gasgeneratoren (16 - 24) proportional und/oder in Abhängigkeit des abgetasteten ungehinderten Vorschubs des Gaskissens (1) gezündet sind.

19. Beifahrerairbag nach einem der Ansprüche 8 bis 18, dadurch gekennzeichnet, daß die jeweiligen Kammern (5, 6, 7) des Gaskissens (1) in mehrere Fächer durch mittels Fülldruck trennbare Verschlüsse (16) unterteilt sind und daß die Fächer in Abhängigkeit von der Vorschubabtastung füllbar sind.

20. Beifahrerairbag nach einem der Ansprüche 8 bis 19, gekennzeichnet, daß die Fächer in der Weise zueinander angeordnet sind, daß bei einer teilweisen Befüllung des Gaskissens (1), das Kissengewebe straff gespannt ist.

21. Beifahrerairbag nach Anspruch 19 oder 20, dadurch gekennzeichnet, daß die trennbaren Verschlüsse (16) etwa senkrecht zur Vorschubrichtung verlaufen.

22. Beifahrerairbag nach einem der Ansprüche 8 bis 21, dadurch gekennzeichnet, daß zum Befüllen der jeweiligen Kammern (5, 6, 7) des Gaskissens (1) ein Gasgenerator (15) vorgesehen ist.

23. Beifahrerairbag nach einem der Ansprüche 1 bis 22, dadurch gekennzeichnet, daß im mittleren Kissenteil (4) ein niedrigerer Fülldruck vorliegt als in den beiden seitlichen Kissenteilen (2, 3).

24. Beifahrerairbag nach einem der Ansprüche 1 bis 23, dadurch gekennzeichnet, daß der Füllgasdruck insbesondere im mittleren Kissenteil (4) in Abhängigkeit vom Gewicht des auf den Beifahrersitz befindlichen Fahrzeuginsassen eingestellt ist.

25. Beifahrerairbag nach einem der Ansprüche 1 bis 24, dadurch gekennzeichnet, daß für die Kammer (5) des mittleren Kissenteils (4) ein Überdruckventil (42) vorgesehen ist, das dann geöffnet ist, wenn in der Kammer (5) ein Fülldruck herrscht, der einen eingestellten Sollwert überschreitet.

26. Beifahrerairbag nach einem der Ansprüche 1 bis 25, dadurch gekennzeichnet, daß in den Gasführungen (12, 13) zu den Kammern der Kissenteile (2, 3, 4) Leitbleche (45) vorgesehen sind.

27. Beifahrerairbag nach einem der Ansprüche 1 bis 26, dadurch gekennzeichnet, daß das Gaskissen (1) mit einem Befestigungsrahmen (43) an der Airbagwanne (44), welche in die Instrumententafel integriert ist, befestigt ist.

## Claims

1. Passenger side airbag with impact protection which is arranged during normal operation in a vehicle instrument panel and which can be inflated with an inflation gas due to activation of a sensor, and which is divided into three cushion parts comprising separately inflatable chambers, namely a central cushion part and two lateral cushion parts, characterised in that
- provided on a sheath (31) surrounding the gas generator (15) or on an airbag trough (44) on which the gas cushion is fastened, are projections which form gas conduits (12, 13) and are oriented outwardly at an oblique angle with respect to a vertical central plane into the two lateral cushion parts (2, 3),
- the two lateral cushion parts (2, 3) can be filled prior to the central cushion part (4); and
- due to the unfolding of the two filled lateral cushion parts (2, 3), flow paths (8 to 11) are opened for the inflation gas from the two lateral cushion parts (2, 3) into the central cushion part (4).

2. Passenger side airbag according to claim 1, characterised in that the lateral cushion parts (2, 3) have a spacing from one another in the inflated state which at least corresponds to the width of a child seat (9).

3. Passenger side airbag according to one of claims 1 or 2, characterised in that, in the inflated state, the lateral cushion parts (2, 3) project further into the interior of the vehicle than the central cushion part (4).

4. Passenger side airbag according to one of claims 1 to 3, characterised in that the gas cushion (1) comprises at least three chambers (5, 6, 7) of which two chambers (6, 7) serve to inflate the two lateral cushion parts (2, 3) and at least one chamber (5) serves to inflate the central cushion part (4).

5. Passenger side airbag according to one of claims 1 to 4, characterised in that the two lateral cushion parts (2, 3) are connected via a connecting cushion part (39) preferably at their upper ends.

6. Passenger side airbag according to claim 5, characterised in that the connecting cushion part (39) is filled via the chambers (6, 7) of the two lateral cushion parts (2, 3).

7. Passenger side airbag according to one of claims 1 to 6, characterised in that the gas cushion (1) with separate chamber folding is arranged in the resting state in a compartment below a cover (32) comprising set breaking points (34).

8. Passenger side airbag according to one of claims 1 to 7, characterised in that the amount of gas supplied per time unit into the respective chambers (5, 6, 7) is controlled by the unimpeded forward movement of the gas cushion (1) into the passenger space.

9. Passenger side airbag according to claim 8, characterised in that the amount of gas supplied into the respective chambers (5, 6, 7) is proportional to a detected length of the unimpeded forward movement of the gas cushion (1), in particular of the respective cushion parts (2, 3, 4, 39) into the passenger space.

10. Passenger side airbag according to claim 8 or 9, characterised in that the inflation process subsequent to the scanning of the forward movement can be ended as a function of the scanned length and/or time of the forward movement.

11. Passenger side airbag according to one of claims 8 to 10, characterised in that the amount of inflation gas fed into the respective chambers (5, 6, 7) can be fed in stages.

12. Passenger side airbag according to one of claims 8 to 11, characterised in that, from an amount of gas supplied by an inflation gas source (15; 16 to 24), a part of the amount of gas proportional to the unimpeded forward movement of the gas cushion is guided to the respective chambers (5, 6, 7) of the gas cushion (1) and the remainder of the amount of gas is diverted.

13. Passenger side airbag according to one of claims 8 to 12, characterised in that the amount of gas supplied to the respective chambers (5, 6, 7) is adjusted by valve control.

14. Passenger side airbag according to one of claims 8 to 13, characterised in that the amount of gas supplied to the respective chambers (5, 6, 7) is adjusted by one or more controlled screens (41) provided in the flow path between the gas source (15; 16 to 24) and the respective chambers (5, 6, 7).

15. Passenger side airbag according to one of claims 1 to 14, characterised in that the length and/or time of the unimpeded forward movement can be detected in the scanning phase.

16. Passenger side airbag according to one of claims 8 to 15, characterised in that the speed of the forward movement can be scanned in the scanning phase and a reduction of the speed of forward movement can be detected.

17. Passenger side airbag according to one of claims 8 to 16, characterised in that a plurality of gas generators (16 to 24) are provided for inflating the respective chambers (5, 6, 7) of the gas cushion (1).

18. Passenger side airbag according to claim 17, characterised in that the gas generators (16 to 24) are ignited proportionally to and/or as a function of the scanned unimpeded forward movement of the gas cushion (1).

19. Passenger side airbag according to one of claims 8 to 18, characterised in that the respective chambers (5, 6, 7) of the gas cushion (1) are divided into a plurality of compartments by closures (16) which can be divided by inflation pressure and in that the compartments can be filled as a function of the scanning of the forward movement.

20. Passenger side airbag according to one of claims 8 to 19, characterised in that the compartments are arranged with respect to one another such that when the gas cushion (1) is partially filled, the cushion fabric is tightly tensioned.

21. Passenger side airbag according to claim 19 or 20, characterised in that the divisible closures (16) extend roughly perpendicularly to the direction of forward movement.

22. Passenger side airbag according to one of claims 8 to 21, characterised in that a gas generator (15) is provided for inflating the respective chambers (5, 6, 7) of the gas cushion (1).

23. Passenger side airbag according to one of claims 1 to 22, characterised in that there is a lower inflation pressure in the central cushion part (4) than in the two lateral cushion parts (2, 3).

24. Passenger side airbag according to one of claims 1 to 23, characterised in that the inflation gas pressure in particular in the central cushion part (4) is adjusted as a function of the weight of the vehicle occupant on the passenger seat.

25. Passenger side airbag according to one of claims 1 to 24, characterised in that a pressure relief value (42) is provided for the chamber (5) of the central cushion part (4) and is opened if the inflation pressure in the chamber (5) exceeds an adjusted set value.

26. Passenger side airbag according to one of claims 1 to 25, characterised in that guide baffles (45) are provided in the gas conduits (12, 13) to the chambers of the cushion parts (2, 3, 4).

27. Passenger side airbag according to one of claims 1 to 26, characterised in that the gas cushion (1) is fastened to a fastening frame (43) on the airbag trough (44) integrated into the instrument panel.

## Revendications

1. Coussin gonflable (coussin d'air) pour passager comportant une protection contre les chocs, agencé en service normal dans un tableau de bord d'un véhicule et pouvant être gonflé par un gaz de remplissage par suite du déclenchement d'un capteur, subdivisée en trois parties de coussin comportant trois chambres gonflables séparément, à savoir une partie centrale du coussin et deux parties latérales du coussin, caractérisé en ce que
une enveloppe (31) entourant le générateur de gaz (15) ou une cuve du coussin gonflable (44) sur laquelle est fixé le coussin gonflable, comporte des prolongements formant des conduites de gaz (12, 13), orientés dans les deux parties latérales du coussin (2, 3) de sorte à former un angle oblique vers l'extérieur par rapport à un plan médian vertical,
les deux parties latérales du coussin (2, 3) peuvent être remplies avant la partie centrale du coussin (4); et
le déploiement des deux parties latérales gonflées du coussin (2, 3) entraîne l'ouverture de voies d'écoulement (8 à 11) du gaz de remplissage, à partir des deux parties latérales du coussin (2, 3) vers la partie centrale du coussin (4).

2. Coussin gonflable pour passager selon la revendication 1, caractérisé en ce que les parties latérales du coussin (2, 3) présentent à l'état gonflé au moins un écartement correspondant à la largeur d'un siège pour enfant (9).

3. Coussin gonflable pour passager selon l'une des revendications 1 ou 2, caractérisé en ce que les parties latérales du coussin (2, 3) débordent à l'état gonflé dans l'habitacle du véhicule sur une distance supérieure à celle de la partie centrale du coussin (4).

4. Coussin gonflable pour passager selon l'une des revendications 1 à 3, caractérisé en ce que le coussin gonflable (1) comporte au moins trois chambres (5, 6, 7), deux chambres (6, 7) servant au gonflement des deux parties latérales du coussin (2, 3) et au moins une chambre (5) servant au gonflement de la partie centrale du coussin (4).

5. Coussin gonflable pour passager selon l'une des revendications 1 à 4, caractérisé en ce que les deux parties latérales du coussin (2,3) sont reliées de préférence au niveau de leurs extrémités supérieures par une partie de coussin de liaison (39).

6. Coussin gonflable pour passager selon la revendication 5, caractérisé en ce que la partie de coussin de liaison (39) et rempli par l'intermédiaire des chambres (6, 7) des deux parties latérales du coussin (2, 3).

7. Coussin gonflable pour passager selon l'une des revendications 1 à 6, caractérisé en ce que le coussin gonflable (1) est agencé à l'état de repos avec un pliage séparé des chambres dans un compartiment au-dessous d'un couvercle (32), comportant des points de rupture théoriques (34).

8. Coussin gonflable pour passager selon l'une des revendications 1 à 7, caractérisé en ce que la quantité de gaz amenée par unité de temps dans les chambres respectives (5, 6, 7) est commandée par l'avance libre du coussin gonflable (1) dans l'habitacle.

9. Coussin gonflable selon la revendication 8, caractérisé en ce que la quantité de gaz amenée dans les chambres respectives (5, 6, 7) est proportionnelle à une longueur balayée de l'avance libre du coussin gonflable (1), en particulier de la partie de coussin respective (2, 3, 4, 39) dans l'habitacle.

10. Coussin gonflable pour passager selon l'une des revendications 8 ou 9, caractérisé en ce que le procédé de remplissage suivant dans le temps le balayage de l'avance peut être achevé en fonction de la longueur et/ou du temps d'avance balayés.

11. Coussin gonflable pour passager selon l'une des revendications 8 à 10, caractérisé en ce que la quantité de gaz amenée vers les différentes chambres (5, 6, 7) peut être amenée progressivement.

12. Coussin gonflable pour passager selon l'une des revendications 8 à Il, caractérisé en ce qu'une quantité de gaz partielle proportionnelle à l'avance libre du coussin gonflable de la quantité de gaz fournie par une source de gaz de remplissage (15; 16 à 24) est amenée vers les différentes chambres (5, 6, 7) du coussin gonflable (1), la quantité de gaz restante étant déviée.

13. Coussin gonflable pour passager selon l'une des revendications 8 à 12, caractérisé en ce que la quantité de gaz amenée vers les différentes chambres (5, 6, 7) est ajustée par une commande par soupape.

14. Coussin gonflable pour passager selon l'une des revendications 8 à 13, caractérisé en ce que la quantité de gaz amenée vers les différentes chambres (5, 6, 7) est ajustée par un ou plusieurs déflecteurs commandés (14) prévus et agencés dans la voie d'écoulement entre la source de gaz (15; 16 à 24) et les différentes chambres (5, 6, 7).

15. Coussin gonflable pour passager selon l'une des revendications 1 à 14, caractérisé en ce qu'au cours de la phase de balayage, la longueur et/ou le temps d'avance libre peuvent être détectés.

16. Coussin gonflable pour passager selon l'une des revendications 8 à 15, caractérisé en ce qu'au cours de la phase de balayage, la vitesse d'avance peut être balayée, une réduction de la vitesse d'avance pouvant être détectée.

17. Coussin gonflable pour passager selon l'une des revendications 8 à 16, caractérisé en ce que plusieurs générateurs de gaz (16 à 24) sont prévus pour le remplissage de la chambre respective (5, 6, 7) du coussin gonflable (1).

18. Coussin gonflable selon la revendication 17, caractérisé en ce que les générateurs de gaz (16 à 24) sont amorcés de manière proportionnelle à l'avance libre détectée du coussin gonflable (1) ou en fonction de celle-ci.

19. Coussin gonflable pour passager selon l'une des revendications 8 à 18, caractérisé en ce que les chambres respectives (5, 6, 7) du coussin gonflable (1) sont subdivisées en plusieurs compartiments par des fermetures (16) séparables par la pression de remplissage, les compartiments pouvant être remplis en fonction du balayage de l'avance.

20. Coussin gonflable pour passager selon l'une des revendications 8 à 19, caractérisé en ce que les compartiments sont agencés les uns par rapport aux autres de sorte que lors d'un remplissage partiel du coussin gonflable (1) le tissu du coussin est fermement tendu.

21. Coussin gonflable pour passager selon l'une des revendications 19 ou 20, caractérisé en ce que les fermetures (16) séparables s'étendent de manière pratiquement verticale par rapport à la direction de l'avance.

22. Coussin gonflable pour passager selon l'une des revendications 8 à 21, caractérisé en ce qu'un générateur de gaz (15) est prévu pour le remplissage des chambres respectives (5, 6, 7) du coussin gonflable (1).

23. Coussin gonflable pour passager selon l'une des revendications 1 à 22, caractérisé en ce que la pression de remplissage établie dans la partie centrale du coussin (4) est inférieure à celle existant dans les deux parties latérales du coussin (2, 3).

24. Coussin gonflable pour passager selon l'une des revendications 1 à 23, caractérisé en ce que la pression du gaz de remplissage, en particulier dans la partie centrale du coussin (4) est ajustée en fonction du poids de l'occupant assis sur le siège de passager.

25. Coussin gonflable pour passager selon l'une des revendications 1 à 24, caractérisé en ce que la chambre (5) de la partie centrale du coussin (4) comporte une soupape de surpression (42), ouverte en cas de l'existence dans la chambre (5) d'une pression de remplissage supérieure à une valeur théorique réglée.

26. Coussin gonflable pour passager selon l'une des revendications 1 à 25, caractérisé en ce que les conduites de gaz (12, 13) menant vers les chambres des parties de coussin (2, 3, 4) contiennent des tôles de guidage (45).

27. Coussin gonflable pour passager selon l'une des revendications 1 à 26, caractérisé en ce que le coussin gonflable (1) est fixé avec un châssis de fixation (43) sur la cuve du coussin gonflable (44), intégrée dans le tableau de bord.
